# EUROPÄISCHE PATENTANMELDUNG

(11) **EP 4 697 459 A1**
(43) Veröffentlichungstag der Anmeldung: **18.02.2026**
(21) Anmeldenummer: 24194208.5
(22) Anmeldetag: 12.08.2024
(51) Int. Cl.: H01M 50/103, H01M 50/124, H01M 50/342

(54) **ANORDNUNG ZUR DRUCKENTLASTUNG EINER AUSSENISOLIERUNG UND BATTERIEZELLE MIT DRUCKENTLASTETER AUSSENISOLIERUNG**

(71) Anmelder: Cellforce Group GmbH, 72138 Kirchentellinsfurt (DE)
(72) Erfinder: Gräf, Jürgen, 72072 Tübingen (DE); Bubeck, Luis, 72072 Tübingen (DE)
(74) Vertreter: Müller Schupfner & Partner Patent- und Rechtsanwaltspartnerschaft mbB (Muc)

(57) **Zusammenfassung**

Die Erfindung betrifft eine Isolierungsanordnung für eine Batteriezelle mit einer mindestens einteilig ausgestalteten Außenisolierung, wobei die Außenisolierung zumindest bereichsweise außenseitig auf einem Zellgehäuse aufliegt und das Zellgehäuse elektrisch isoliert, wobei mindestens eine Vertiefung oder Kavität durch die Außenisolierung verdeckt ist, wobei die Außenisolierung in oder an der mindestens einen Kavität durch mindestens ein Stützelement gestützt und/oder bedeckt und/oder mit einer Druckausgleichsöffnung versehen ist. Des Weiteren betrifft die Erfindung eine Batteriezelle.

## Beschreibung

Die Erfindung betrifft eine Isolierungsanordnung für eine Batteriezelle mit einer mindestens einteilig ausgestalteten Außenisolierung, wobei die Außenisolierung zumindest bereichsweise außenseitig auf einem Zellgehäuse aufliegt und das Zellgehäuse elektrisch isoliert. Des Weiteren betrifft die Erfindung eine Batteriezelle mit einer Isolierungsanordnung.

Im Batteriebereich sind sogenannte Hardcase-Zellen zur Speicherung von elektrischer Energie entsprechend dem elektrochemischen Prinzip bekannt. Derartige Zellen können beispielsweise als Lithium-Ionen-Batteriezellen ausgestaltet sein. Die Hardcase-Zellen weisen regulär ein Zellgehäuse aus einem Metall auf, welches zylinderförmig oder prismenförmig geformt ist. In dem Zellgehäuse ist ein Aufnahmeraum ausgebildet, um einen Elektrodenstapel oder Elektrodenwickel aus Anodenschichten, Kathodenschichten und Separatorschichten aufzunehmen. Darüber hinaus ist in dem Aufnahmeraum ein Elektrolyt vorgesehen.

Bei Batteriezellen mit zwei isoliert durch das Zellgehäuse geführten Terminals liegt ein Potential am Zellgehäuse durch Kontakt des Elektrolyten mit der Innenseite des Zellgehäuses an. Weiterhin sind Batteriezellen mit nur einem Terminal als Batteriepol bekannt, welcher vom Zellgehäuse isoliert ist. Ein weiterer Batteriepol wird gezielt auf das Zellgehäuse gelegt, wodurch am Zellgehäuse eine elektrische Spannung anliegt. Zum Vermeiden von unbeabsichtigten Kurzschlüssen müssen derartige Batteriezellen mit einer Außenisolierung versehen sein.

Die Außenisolierung besteht in der Regel aus einer thermoplastischen Kunststofffolie aus Polyethylenterephthalat/Mylar (PET), Polyethylen (PE) oder Polypropylen (PP), die ein- oder mehrteilig ausgeführt sein kann. Zur Sicherstellung der elektrischen Isolation des kompletten Zellgehäuses werden auch Vertiefungen und verschlossene Öffnungen im Zellgehäuse von der Außenisolierung überspannt. Somit wird auch eine vertieft bzw. versetzt angeordnete Berstmembran der Batteriezelle ebenfalls von der Außenisolierung verdeckt. Das Öffnungsverhalten der Berstmembran wird durch die Außenisolierung nur geringfügig geändert, da die dünne Folie dem mit hohem Druck und der hohen Temperatur austretender Gase bei einem thermischen Durchgehen der Batteriezelle schnell nachgibt.

An den Stellen, wo die Außenisolierung nicht flächig auf der äußeren Oberfläche des Zellgehäuses aufliegt entsteht zwischen der Außenisolierung und dem Zellgehäuse ein Leerraum bzw. eine Kavität. Die Außenisolierung im Bereich derartiger Kavitäten kann durch äußere Druckschwankungen oder mechanische Einwirkungen beschädigt werden. Hierdurch kann die elektrische Isolierung des Zellgehäuses durch die Außenisolierung im regulären Betrieb oder bei einem Transport der Batteriezelle beeinträchtigt werden.

Die vorliegende Erfindung hat daher die Aufgabe, eine Isolierungsanordnung und eine Batteriezelle zu schaffen, die einen Schutz der Außenisolierung im Bereich von Kavitäten ermöglichen. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird eine Isolierungsanordnung für eine Batteriezelle mit einer mindestens einteilig ausgestalteten Außenisolierung bereitgestellt. Die Anordnung bzw. Isolierungsanordnung dient zur Druckentlastung der Außenisolierung im Bereich von überdeckten Vertiefungen, Aussparungen und/oder Öffnungen, über welchen die Außenisolierung Kavitäten bzw. Hohlräume ausbilden kann

Die Außenisolierung liegt zumindest bereichsweise außenseitig auf einem Zellgehäuse auf und isoliert das Zellgehäuse elektrisch. Das Zellgehäuse kann mindestens einen Zellgehäusemantel und mindestens einen Zelldeckel aufweisen, die einen Aufnahmeraum ausbilden bzw. einschließen. In dem Aufnahmeraum kann mindestens ein Elektrodenstapel oder mindestens ein Elektrodenwickel positioniert werden.

Mindestens eine Vertiefung und/oder Kavität des Zellgehäuses ist durch die Außenisolierung verdeckt oder überdeckt. Die mindestens eine Vertiefung kann als eine Ausnehmung, Ausbeulung, Stanzung, Ausfräsung und dergleichen sein. Beispielsweise kann eine Vertiefung durch eine vertieft im Zellgehäuse angeordnete Berstmembran bzw. durch einen innenseitig im Zellgehäuse angeordnete Berstmembran ausgebildet sein. Darüber hinaus können im Bereich von mechanischen Befestigungspunkten, externen Kühlrippen bzw. Kühlstrukturen, Befüllöffnungen und dergleichen Vertiefungen vorgesehen sein. Derartige Vertiefungen werden durch die Außenisolierung überdeckt bzw. überzogen, sodass eine Kavität entsteht.

Die Außenisolierung ist in oder an der mindestens einen Kavität durch mindestens ein Stützelement gestützt und/oder ist durch mindestens ein Stützelement bedeckt und/oder ist mit mindestens einer Druckausgleichsöffnung versehen. Durch diese Maßnahmen kann die Außenisolierung, die beispielsweise als eine Isolationsfolie ausgebildet ist, in Bereichen ohne eine direkte Auflage auf dem Zellgehäuse vor äußerem Druck entlastet werden. Insbesondere kann hierdurch eine unkontrollierte Perforation der Außenisolierung verhindert und die elektrische Isolierung des Zellgehäuses der Batteriezelle gewährleistet werden.

Entsprechend einem weiteren Aspekt der Erfindung wird eine Batterie bzw. Batteriezelle bereitgestellt. Die Batteriezelle weisend mindestens eine erfindungsgemäße Isolieranordnung auf. Weiterhin weist die Batteriezelle ein aus einem Zellgehäusemantel und mindestens einem Zelldeckel ausgebildetes Zellgehäuse auf, welches zumindest bereichsweise durch eine mindestens einteilig ausgeführte Außenisolierung umschlossen ist.

Das Zellgehäuse weist einen Aufnahmeraum auf, in welchem mindestens ein Elektrodenstapel angeordnet ist. Mindestens eine Vertiefung des Zellgehäuses ist durch die Außenisolierung überdeckt.

Die Außenisolierung kann einteilig oder mehrteilig ausgeführt sein, wobei die jeweiligen Teile der Außenisolierung sich zumindest bereichsweise überlappen. Somit kann beispielsweise ein erster Teil der Außenisolierung einen Zelldeckel bedecken. Ein zweiter Teil der Außenisolierung kann den Zellgehäusemantel bedecken und den ersten Teil der Außenisolierung bereichsweise überlappen.

Die Außenisolierung kann aus einem elektrisch isolierenden Material, wie beispielsweise PET, bestehen. Insbesondere kann mindesten ein Teil der Außenisolierung als ein bei Hitzeeinwirkung schrumpfender Schlauch ausgebildet sein. Mindestens ein Teil der Außenisolierung kann als eine Folie ausgebildet sein. Die Außenisolierung kann durch Kleben, durch Reibschluss und/oder durch Formschluss mit dem Zellgehäuse verbunden sein. Beispielsweise kann der zweite Teil der Außenisolierung als eine schlauchartige PET-Folie ausgebildet sein, die nach dem Überschieben durch Erwärmung straff aufgeschrumpft wird, wobei sich deren zunächst überstehende Enden um die Ecken und Kanten des mindestens einen Zelldeckels legen und dort einen weiteren Teil der Außenisolierung überlappen.

Im Bereich der von Vertiefungen entsteht zwischen der Außenisolierung und dem Zellgehäuse ein Leerraum bzw. eine Kavität, durch welche die frei hängende Außenisolierung bei Druck von außen auf Zug belastet wird und unkontrolliert einreißen kann. Durch die oben beschriebenen Maßnahmen kann diese unkontrollierte Beschädigung der Außenisolierung gezielt unterbunden werden.

Durch die Verwendung des mindestens einen Stützelements kann die Außenisolierung im Bereich der Vertiefung innenseitig bzw. vom innen her abgestützt werden. Ein lokales Eindrücken der Außenisolierung im Bereich der Kavität wird hierdurch verhindert.

Alternativ oder zusätzlich kann ein extern angeordnetes Stützelement die Kavität außenseitig überdecken und die Außenisolierung vor einem Eindrücken bei einer Druckbelastung schützen.

Bei einer weiteren, alternativen oder zusätzlichen Möglichkeit kann die Außenisolierung im Bereich der Kavität mit mindestens einer Druckausgleichsöffnung versehen werden. Die Druckausgleichsöffnung kann in Form von einem oder mehreren kleinen Löchern bzw. Durchbrüchen geformt sein, durch welche das im Aufnahmeraum des Zellgehäuses befindliche Gas bzw. Ventinggas oder das Direktkühlmittel hindurch treten kann, sodass stets ein Druckausgleich stattfinden und die Außenisolierung bei Druckstößen nicht auf Zug belastet und zerstört wird.

Die genannten Maßnahmen ermöglichen jeweils oder in beliebiger Kombination eine Entlastung der Außenisolierung gegenüber einer Zugkraft im Bereich der Kavität, die quer zu einer Druckbelastung der Außenisolierung von außen resultieren würde und die Außenisolierung seitlich der Kavität beschädigen würde.

Die Abstützung der Außenisolierung durch das mindestens eine Stützelement kann bauraumneutral erfolgen, wenn das mindestens eine Stützelement innerhalb einer zwischen einer Berstmembran und der Außenisolierung ausgebildeten Kavität angeordnet ist, wobei das mindestens eine Stützelement zumindest bereichsweise auf der Berstmembran aufliegt.

Hierdurch kann das Stützelement direkt auf der Berstmembran positioniert werden, um die Zugbelastung der Außenisolierung zu unterbinden.

Gemäß einem weiteren Ausführungsbeispiel ist das mindestens eine Stützelement in Form eines Stützstegs ausgestaltet, welcher durch die Berstmembran ausgebildet oder auf der Berstmembran angeordnet ist. Hierdurch kann ein technisch besonders einfaches Stützelement realisiert werden. Das Stützelement kann ohne zusätzliche Befestigungen in der Kavität positioniert sein und beispielsweise durch einen Formschluss in einer vorgesehenen Position gehalten werden. Je nach Ausgestaltung kann das Stützelement durch Kleben, Schweißen oder Löten mit der Berstmembran und/oder dem Zellgehäuse verbunden sein, um seine Position im Betrieb oder bei einem Transport der Batteriezelle nicht zu variieren.

Die optimale Position des Stützelements kann technisch besonders einfach sichergestellt werden, wenn die Kavität vollständig oder bereichsweise durch das mindestens eine Stützelement ausgefüllt ist.

Nach einer weiteren Ausführungsform liegt das mindestens eine Stützelement zumindest bereichsweise auf einer Abstufung des Zellgehäuses und/oder zumindest bereichsweise auf einem im Zellgehäuse angeordneten Verstärkungselement auf. Die Außenisolierung kann somit über das mindestens eine Stützelement an der Abstufung abgestützt werden. Hierdurch kann eine direkte Belastung der Berstmembran bei einer externen Druckeinwirkung vermieden werden. Die Abstufung kann nachträglich an dem Zellgehäuse angebracht oder bereits bei der Fertigung berücksichtigt und in das Zellgehäuse integriert sein.

Das Verstärkungselement kann beispielsweise in Form einer Leiste innenseitig im Zellgehäuse positioniert sein und als Träger für die Berstmembran fungieren. Randseitig der Berstmembran kann ein Überstand im Bereich einer Öffnung im Zellgehäuse für die Positionierung der Berstmembran verbleiben, welcher als Abstufung für das Abstützen des Stützelements dienen kann. Eine für die Berstmembran vorgesehene Öffnung im Zellgehäuse kann somit um die Abmessung der Abstufung vergrößert werden. Die Berstmembran mit dem Verstärkungselement verschließen vorteilhafterweise die hierfür vorgesehene Öffnung im Zellgehäuse.

Das mindestens eine Stützelement kann besonders vielseitig ausgebildet sein, wenn dieses in Form einer flüssigen und/oder flüssigen und/oder pulverförmigen und/oder ausgehärteten und/oder festen Füllung und/oder in Form einer Einlegeplatte ausgebildet ist. Ein derart ausgebildetes Stützelement kann innerhalb der Kavität angeordnet sein, um die Außenisolierung innenseitig zu stützen. Insbesondere kann das Stützelement als eine lose Füllung mit einer oder mehreren Körnungen oder als eine Flüssigkeit ausgebildet sein. Ein Füllpulver oder eine Füllflüssigkeit können beispielsweise als ein Stützelement fungieren. Je nach Ausgestaltung kann das Stützelement als ein Gel oder als ein Schaum ausgestaltet sein. Dabei kann das Stützelement durch eine ausgehärtete Vergussmasse gebildet sein, die flüssig bleibt oder aushärtet. Eine derartige Vergussmasse kann beispielsweise aus einem Heißkleber, einem Harz ohne einen Härter oder mit einem Härter bestehen.

Gemäß einem weiteren Ausführungsbeispiel ist die Einlegeplatte als eine hohle Einlegeplatte, als eine gelochte Einlegeplatte, als eine gitterförmige Einlegeplatte, als eine geschlitzte Einlegeplatte oder als eine massive Einlegeplatte geformt. Durch diese Maßnahme kann das als eine Einlegeplatte ausgestaltete Stützelement besonders vielseitig ausgebildet sein. Durch das Einbringen von Öffnungen und Löchern in das Einlegeteil, um beispielsweise eine gitterförmige oder eine gelochte Einlegeplatte auszubilden, kann die Masse der Batteriezelle optimiert werden. Auch eine Einlegeplatte aus einem Kunststoff oder Schaum kann zum Senken der Masse der Batteriezelle beitragen.

Die Außenisolierung kann technisch einfach gegenüber einer Zugbelastung geschützt werden, wenn das mindestens eine Stützelement an einer Außenfläche der Außenisolierung im Bereich Kavität angeordnet ist. Beispielsweise kann das Stützelement in Form einer Druckplatte ausgebildet sein, die außen auf der Außenisolierung angeordnet ist und die Kavität überdeckt. Hierdurch kann eine Druckeinwirkung auf die Außenisolierung im Bereich der Kavität durch das Stützelement direkt absorbiert werden. Weiterhin ermöglicht eine außenseitige Anordnung des Stützelements einen Schutz der Außenisolierung im Bereich der Kavität gegenüber mechanischen Einwirkungen, wie beispielsweise Kratzern oder Stößen.

Entsprechend einer weiteren Ausführungsform ist die mindestens eine Kavität zwischen einer Berstmembran und der Außenisolierung ausgebildet, wobei die Außenisolierung zumindest bereichsweise durch die Berstmembran gestützt ist. Durch diese Maßnahme kann die Berstmembran selbst als ein Stützelement agieren und die Außenisolierung abstützen. Die Bereitstellung eines zusätzlichen Stützelements kann somit entfallen.

Die Außenisolierung kann ohne eine Kavität im Bereich der Berstmembran ausgebildet werden und somit gegenüber einer Zugbelastung geschützt sein, wenn die Außenisolierung im Bereich der Kavität derart tiefgezogen ist, dass diese zumindest bereichsweise auf der Berstmembran aufliegt. Die als Folie ausgebildete Außenisolierung kann durch partiellen Tiefzug in die Senkung bzw. Vertiefung hineingezogen werden, sodass die Berstmembran die Außenisolierung von unten bzw. innenseitig abstützen kann. Hierdurch wird eine resultierende Zugspannung der Außenisolierung durch externe Druckstöße unterbunden.

Gemäß einem weiteren Ausführungsbeispiel ist die Außenisolierung im Bereich der Kavität tiefgezogen, oder wobei die Außenisolierung im Bereich der Kavität eine Aussparung aufweist. Die Aussparung der Außenisolierung ist durch einen verformten Isolierungsabschnitt verschlossen, welcher in die Kavität hineinragt. Somit kann der verformte Isolierungsabschnitt, welcher als ein Teil der Außenisolierung ausgebildet ist, sich zumindest bereichsweise an der Berstmembran, an einem Verstärkungsblech, an einem Stützelement und dergleichen abstützen. Der verformte Isolierungsabschnitt kann beispielsweise durch ein Verschweißen oder Kleben mit der restlichen Außenisolierung verbunden sein.

Eine Abstützung der Außenisolierung im Bereich der Kavität kann besonders effizient erfolgen, wenn die Berstmembran im Bereich der Kavität zumindest bereichsweise zu der Außenisolierung hin gewölbt und/oder verformt ist. Die Außenisolierung ist durch diese Maßnahme zumindest bereichsweise durch die Berstmembran gestützt, sodass die Berstmembran als ein Stützelement fungiert. Bei einer an der Zellgehäuseinnenseite angebrachter Berstmembran kann diese mit einer Verprägung oder Verformung nach außen versehen werden, sodass die Vertiefung oder Aussparung im Zellgehäuse durch die verformte Berstmembran ausgefüllt wird, um die Außenisolierung von innen zu stützen.

Nach einer weiteren Ausführungsform ist die Berstmembran auf einem Kragenabschnitt befestigt, welcher dazu eingerichtet ist, einen Abstand zwischen der Berstmembran und der Außenisolierung zu reduzieren oder zu beseitigen. Alternativ oder zusätzlich zu der verformten Berstmembran, kann der Einsatze eines Kragenabschnitts eine Tiefe der Kavität verringern oder die Kavität vollständig beseitigen, sodass die Außenisolierung lokal auf der Berstmembran aufliegen kann. Der Kragenabschnitt kann als Träger für die Berstmembran dienen und beispielsweise auf einem sich über eine komplette Zelllänge erstreckenden Verstärkungsblech ausgebildet sein. Der Kragenabschnitt kann beispielsweise durch eine Ventingöffnung im Zellgehäuse hindurch ragen oder zumindest in die Ventingöffnung hineinragen. Durch diese Maßnahme kann die Berstmembran mit einer benachbarten Wandung des Zellgehäuses bündig befestigt werden.

Nachstehend werden mehrere Ausführungsbeispiele der Erfindung anhand der Zeichnungen näher erläutert. Es zeigen:
Fig. 1 eine Schnittdarstellung eines Zellgehäuses mit einer Außenisolierung im Bereich einer Berstmembran gemäß dem Stand der Technik,
Fig. 2 eine Schnittdarstellung einer Isolierungsanordnung gemäß einer erfindungsgemäßen Ausführungsform mit einem als Einlegeplatte ausgebildeten Stützelement,
Fig. 3, 4 Darstellungen einer Isolierungsanordnung gemäß einer erfindungsgemäßen Ausführungsform mit einem als gitterförmige oder gelochte Einlegeplatte ausgebildeten Stützelement,
Fig. 5 eine Schnittdarstellung einer Isolierungsanordnung gemäß einer erfindungsgemäßen Ausführungsform mit einem als hohle Einlegeplatte ausgebildeten Stützelement,
Fig. 6 eine Schnittdarstellung einer Isolierungsanordnung gemäß einer erfindungsgemäßen Ausführungsform mit einer Vergussmasse als Stützelement,
Fig. 7 eine Schnittdarstellung einer Isolierungsanordnung gemäß einer erfindungsgemäßen Ausführungsform mit einem auf einer Abstufung des Zellgehäuses aufliegenden Stützelement,
Fig.8,9 Darstellungen einer Isolierungsanordnung gemäß einer erfindungsgemäßen Ausführungsform mit einem auf einer Abstufung eines Verstärkungselements aufliegenden Stützelement,
Fig. 10 eine Schnittdarstellung einer Isolierungsanordnung gemäß einer erfindungsgemäßen Ausführungsform mit einer im Bereich einer Kavität tiefgezogenen Außenisolierung,
Fig. 11, 12 Darstellungen einer Isolierungsanordnung gemäß einer erfindungsgemäßen Ausführungsform mit einem im Bereich einer Kavität verformten Isolierungsabschnitt,
Fig. 13 eine Schnittdarstellung einer Isolierungsanordnung gemäß einer erfindungsgemäßen Ausführungsform mit einer Druckausgleichsöffnung,
Fig. 14, 15 Darstellungen einer Isolierungsanordnung gemäß einer erfindungsgemäßen Ausführungsform mit mindestens einem als Stützsteg ausgestalteten Stützelement, welcher auf einer Berstmembran aufliegt,
Fig. 16 eine Schnittdarstellung einer Isolierungsanordnung gemäß einer erfindungsgemäßen Ausführungsform mit einem eine Kavität außenseitig bedeckenden Stützelement,
Fig. 17, 18 Darstellungen einer Isolierungsanordnung gemäß einer erfindungsgemäßen Ausführungsform mit einer verformten Berstmembran als Stützelement,
Fig. 19, 20 Darstellungen einer Isolierungsanordnung gemäß einer erfindungsgemäßen Ausführungsform mit einer auf einem Kragenabschnitt angeordneten Berstmembran als Stützelement, und
Fig. 21, 22 Darstellungen einer Batteriezelle gemäß einer erfindungsgemäßen Ausführungsform mit einer Isolierungsanordnung.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

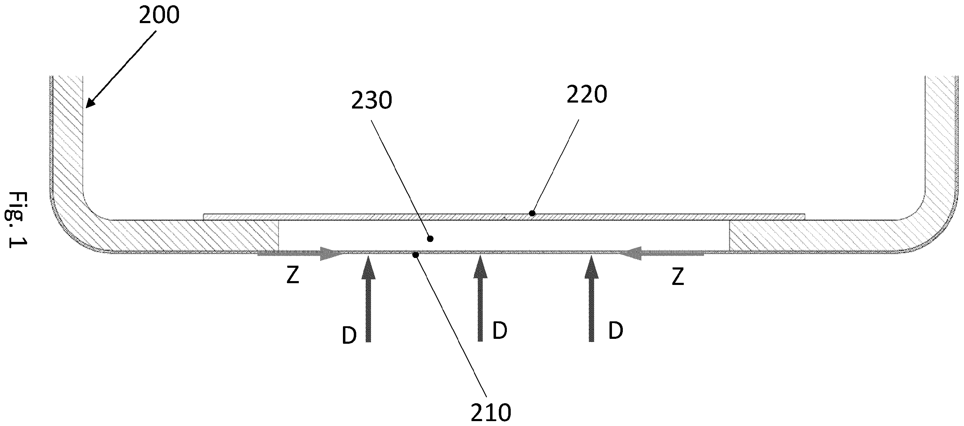

Fig. 1 zeigt eine Schnittdarstellung eines Zellgehäuses 200 mit einer Außenisolierung 210 im Bereich einer Berstmembran 220 gemäß dem Stand der Technik. Das Zellgehäuse 200 ist als ein Zellgehäuse 200 einer nicht näher beschriebenen Batteriezelle ausgestaltet und weist die Außenisolierung 210 als einen externen elektrischen Schutz auf. Die Außenisolierung 210 umspannt alle Vertiefungen des Zellgehäuses 200.

Die Berstmembran 220 ist auf einer Innenseite des Zellgehäuses 200 verschweißt, sodass zwischen der folienartigen Außenisolierung 210 und der Berstmembran 220 ein Leerraum bzw. eine Kavität 230 mit der Tiefe entsprechend einer Materialstärke des Zellgehäuses 200 entsteht.

Bei einem externen Druckanstieg oder einer externen Druckbelastung D wird die Außenisolierung 210 in die Kavität 230 hineingedrückt. Diese Belastung verursacht eine Zugkraft Z auf die Außenisolierung 210 umfangsseitig der Kavität 230. Hierdurch kann die als elektrische Isolierung ausgebildete Außenisolierung 210 unkontrolliert einreißen.

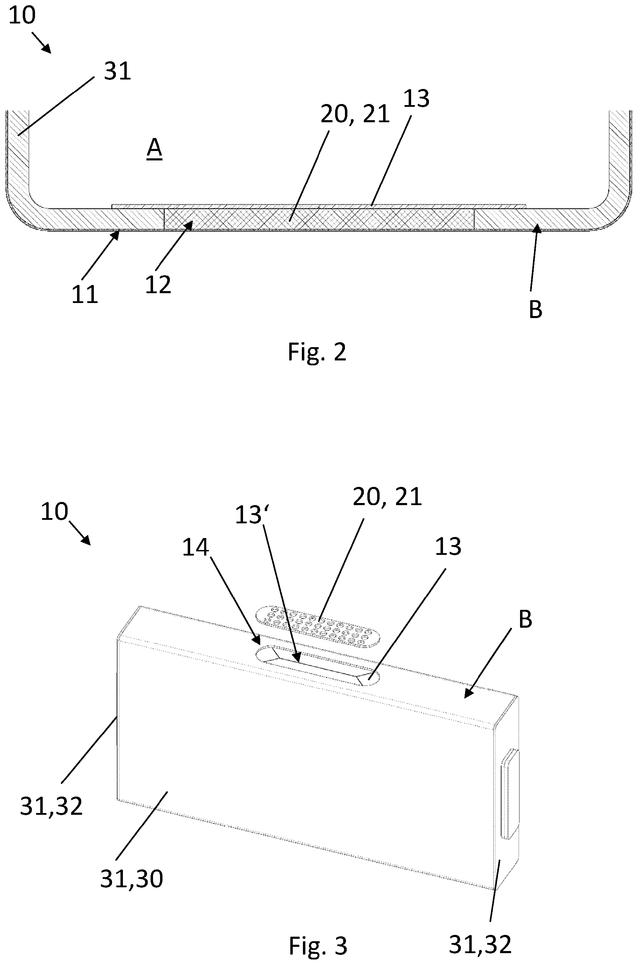

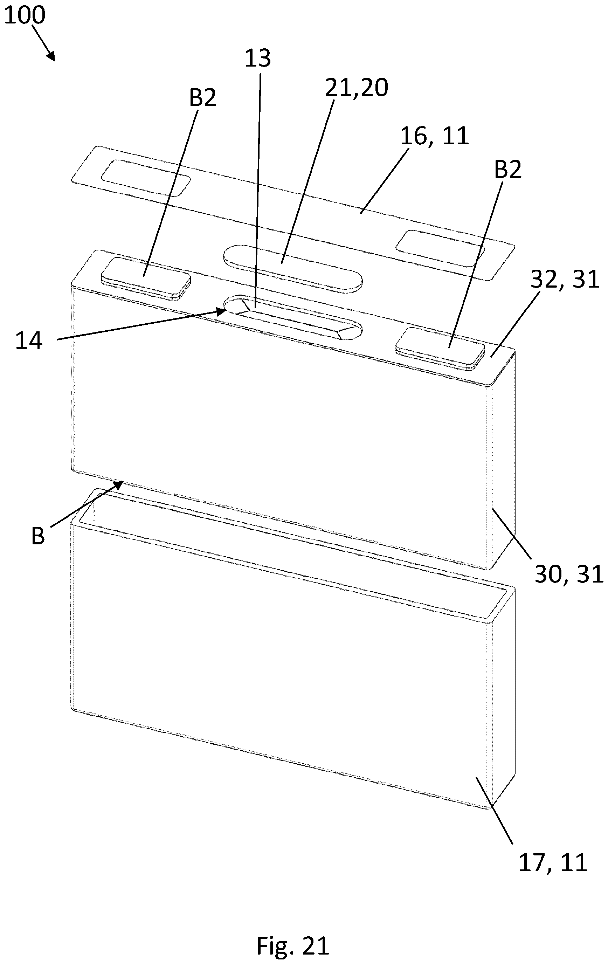

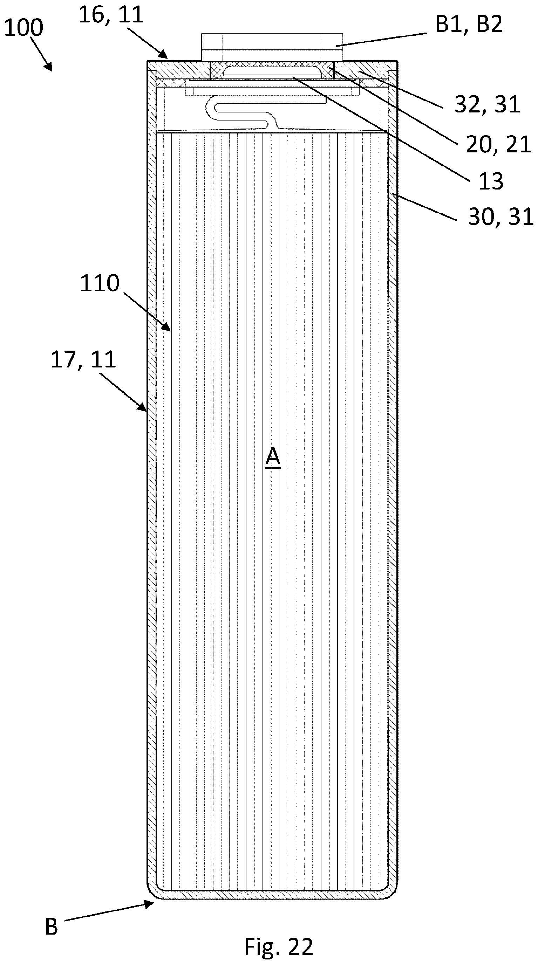

Die Fig. 2 zeigt eine Schnittdarstellung einer Isolierungsanordnung 10 gemäß einer erfindungsgemäßen Ausführungsform mit einem als Einlegeplatte 20 ausgebildeten Stützelement 21. Die Isolierungsanordnung 10 ist dazu eingerichtet, in einer Batteriezelle 100 (s. Fig. 21, 22) verwendet zu werden und weist eine mindestens einteilig ausgestaltete Außenisolierung 11 auf.

Die Anordnung bzw. Isolierungsanordnung 10 dient zur Druckentlastung der Außenisolierung 11 im Bereich von überdeckten Vertiefungen, Aussparungen und/oder Öffnungen, über welchen die Außenisolierung 11 Kavitäten 12 bzw. Hohlräume ausbildet. Im dargestellten Ausführungsbeispiel ist die Kavität 12 in einem bodenseitigen Bereich bzw. in einem Boden B des Zellgehäuses 31 angeordnet.

Die Außenisolierung 11 liegt zumindest bereichsweise außenseitig auf einem Zellgehäuse 31 auf und isoliert das Zellgehäuse 31 elektrisch. Hierdurch wird eine im Bereich einer Berstmembran 13 ausgebildete Vertiefung 14 durch die Außenisolierung 11 verdeckt und die Kavität 12 gebildet.

Die Außenisolierung 11 ist beispielsweise aus einer PET-Folie ausgebildet, die je nach Ausgestaltung plan oder schlauchförmig ausgestaltet sein kann.

Im dargestellten Ausführungsbeispiel ist die ausgebildete Vertiefung 14 eine Ventingöffnung, die innenseitig bzw. aus einer Richtung eines Aufnahmeraums A des Zellgehäuses 31 durch die Berstmembran 13 verschlossen ist. Alternativ kann die mindestens eine Vertiefung 14 des Zellgehäuses 31 als eine Ausnehmung, Ausbeulung, Stanzung, Ausfräsung und dergleichen ausgebildet sein.

In der Kavität 12 ist das als Einlegeplatte 20 ausgestaltete Stützelement 21 eingesetzt. Dabei ist die Einlegeplatte 20 massiv, beispielsweise aus einem Kunststoff, hergestellt und füllt die Vertiefung 14 und die Kavität 12 vollständig aus. Durch den Einsatz der Einlegeplatte 20 kann die Außenisolierung 11 im Bereich der ausgefüllten Kavität 12 nicht mehr eingedrückt werden, wodurch eine unkontrollierte Ausbildung von Zugkräften Z unterbunden wird.

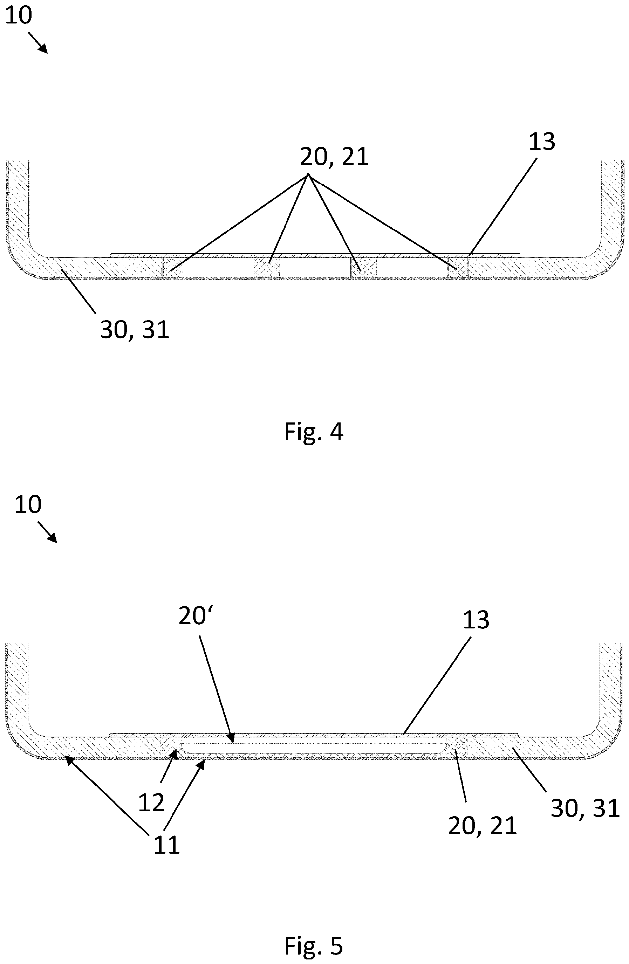

Die Fig. 3 und Fig. 4 zeigen Darstellungen einer Isolierungsanordnung 10 gemäß einer erfindungsgemäßen Ausführungsform mit einem als gitterförmige oder gelochte Einlegeplatte 20 ausgebildeten Stützelement 21. Im Unterschied zum in Fig. 2 gezeigten Ausführungsbeispiel ist die Einlegeplatte 20 zur Gewichtserleichterung und zur Erleichterung des Öffnens der Berstmembran 13 unter Wirkung von Zellinnendruck gelocht oder gitterförmig ausgeführt.

Die Fig. 3 zeigt eine dreidimensionale Explosionsdarstellung der Isolierungsanordnung 10 ohne eine Außenisolierung 11, um die Vertiefung 14 im Bereich der Berstmembran 13 zu veranschaulichen. Die dargestellte, gelochte, Einlegeplatte 20 dient als Stützelement 21 und wird in die Vertiefung 14 hineingelegt. Anschließend kann die Außenisolierung 11 über das Zellgehäuse 31 gezogen werden. Im Bereich der Vertiefung 14 stützt das Stützelement 21 die Außenisolierung 11 und verhindert effizient eine Beschädigung durch äußere Druckschwankungen.

Die Fig. 3 veranschaulicht weiterhin einen beispielhaften Aufbau des Zellgehäuses 31. Das Zellgehäuse 31 für den Einsatz in einer prismatischen Hardcase-Batteriezelle geformt und weist einen rohrförmigen Zellgehäusemantel 30 auf. An zwei einander gegenüberliegenden Schmalseiten des Zellgehäuses 31 ist jeweils ein Zelldeckel 32 angeordnet. Der Zellgehäusemantel 30 wird durch die Zelldeckel 32 verschlossen, sodass der innere Aufnahmeraum A entsteht.

Die an einer Unterseite bzw. am Boden B des Zellgehäusemantels 30 positionierte Ventingöffnung wird durch die Berstmembran 13, beispielsweise durch Schweißen, auf einer Innenseite des Zellgehäusemantels 30 verschlossen. Die Berstmembran 13 ist hierdurch gegenüber einer Außenkontur des Zellgehäuses 31 versenkt bzw. vertieft angeordnet, wodurch die Vertiefung 14 resultiert.

Die Fig. 4 zeigt eine Schnittdarstellung der Isolierungsanordnung 10, um die Stützfunktion der gelochten oder gitterförmigen Einlegeplatte 20 in der Kavität 12 zu veranschaulichen. Die Außenisolierung 11 kann durch die Einlegeplatte 20 gegenüber einem in Richtung der Berstmembran 13 gerichteten Eindrücken gestützt bzw. geschützt werden.

In der Fig. 5 ist eine weitere Schnittdarstellung einer Isolierungsanordnung 10 gemäß einer erfindungsgemäßen Ausführungsform gezeigt. Im Unterschied zu den bereits beschriebenen Ausführungsbeispielen, wird hier eine hohl ausgebildete Einlegeplatte 20 in der Kavität 12 angeordnet, um die Außenisolierung 11 stützen zu können.

Das als hohle Einlegeplatte 20 ausgebildete Stützelement 21 ist in Richtung der Berstmembran 13 hohl ausgeführt und kann sich am Rand der Berstmembran 13, beispielsweise außerhalb von Kerben oder Perforierungen 13' der Berstmembran 13, abstützen. Hierdurch wird das unmittelbare Öffnungsverhalten der Berstmembran 13 nicht beeinflusst, da zwischen der Berstmembran 13 und der hohlen Einlegeplatte 20 ein Spalt 20' besteht.

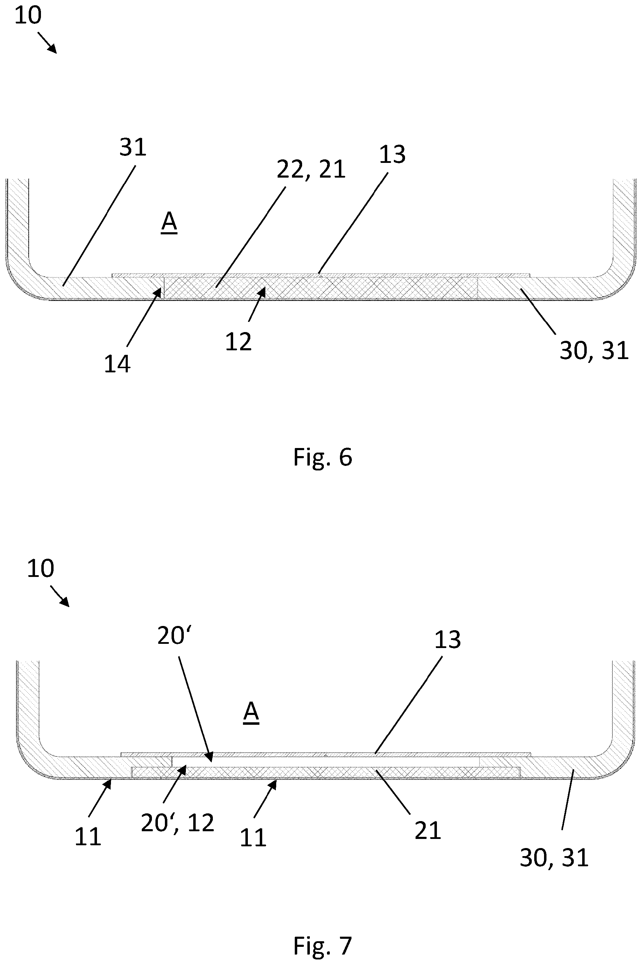

In Fig. 6 ist eine Schnittdarstellung einer Isolierungsanordnung 10 gemäß einer erfindungsgemäßen Ausführungsform mit einer Vergussmasse 22 als Stützelement 21 gezeigt. Die Vertiefung 14 im Bereich der Berstmembran 13 wird hier beispielsweise durch eine aushärtende Harzmasse oder durch einen Schaum, wie beispielsweise PU-Schaum, ausgefüllt. Anschließend kann die Außenisolierung 11 auf das Zellgehäuse 31 aufgetragen werden, wobei die Vergussmasse 22 ein Eindrücken der Außenisolierung 11 im Bereich der Vertiefung 14 verhindert oder zumindest minimiert. Die Verwendung einer schaumförmigen Vergussmasse 22 kann eine möglichst geringe Beeinflussung des Öffnungsdrucks und des Öffnungsverhaltens der Berstmembran 13 ermöglichen.

Je nach Ausgestaltung kann die Vergussmasse 22 in einer flüssigen Form oder Pulverform vorliegen und durch die Außenisolierung 11 in der Kavität 12 eingeschlossen werden.

Die Fig. 7 zeigt eine Schnittdarstellung einer Isolierungsanordnung 10 gemäß einer erfindungsgemäßen Ausführungsform mit einem auf einer Abstufung 32 des Zellgehäuses 31 aufliegenden Stützelement 21. Das Stützelement 21 ist beispielhaft als eine Platte ausgebildet, welche die Kavität 12 nicht vollständig ausfüllt. Analog zu der in Fig. 5 gezeigten Ausführungsform wird durch die Abstufung 32 zwischen der Berstmembran 13 und dem Stützelement 21 ein Spalt 20' ausgebildet. Das auf der Abstufung 32 aufliegende Stützelement 21 verhindert ein Eindrücken der Außenisolierung 11 im Bereich der Kavität 12.

Die Abstufung 32 kann vollständig umlaufend oder bereichsweise ausgebildet sein und ermöglicht ein Beabstanden des Stützelements 21 von der Berstmembran 13. Darüber hinaus kann das auf der mindestens einen Abstufung 32 aufliegende Stützelement 21 die Berstmembran 13 von äußeren Druckschwankungen entkoppeln.

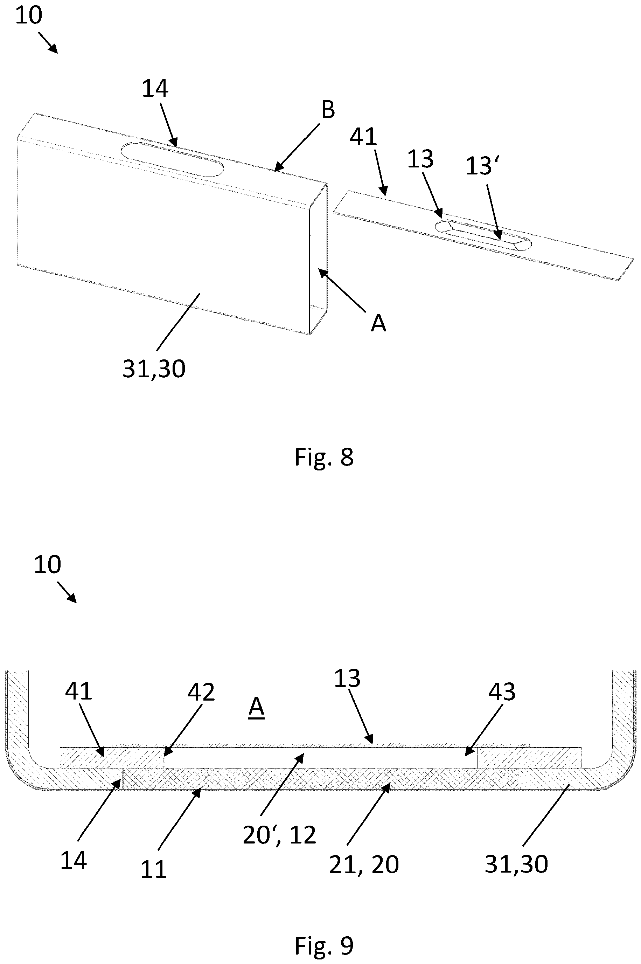

In Fig.8 und Fig. 9 sind Schnittdarstellungen einer Isolierungsanordnung 10 gemäß einer erfindungsgemäßen Ausführungsform mit einem auf einer Abstufung 42 eines Verstärkungselements 41 aufliegenden Stützelement 21 gezeigt. Analog zu der in Fig. 7 gezeigten Ausführungsmöglichkeit wird hier eine Abstufung 42 durch ein zusätzliches Verstärkungselement 41 in die Ventingöffnung 14 eingebracht. Die Ventingöffnung 14 ist in Fig. 8 in einer dreidimensionalen Darstellung veranschaulicht, wobei der Übersicht halber nur der Zellgehäusemantel 30 des Zellgehäuses 31 und das Verstärkungsblech 41 mit der Berstmembran 13 gezeigt sind.

An der Unterseite B des Zellgehäusemantels 30 wird innen ein über die komplette Zelllänge reichendes Verstärkungselement 41 positioniert und mit dem Zellgehäusemantel 30 geschweißt. Das Verstärkungselement 41 weist einen der Ventingöffnung 14 korrespondierenden Durchbruch 43 auf, welcher durch die Berstmembran 13 verschlossen wird.

Der Durchbruch 43 im Verstärkungselement 41 ist umlaufend kleiner, als der Durchbruch bzw. die Ventingöffnung 14 im Zellgehäusemantel 30. An der hierdurch entstehenden Abstufung 42 kann das als Einlegeplatte ausgebildete Stützelement 21 sich abstützen, sodass die Berstmembran 13 nicht durch von außen wirkenden Druck belastet wird.

Das unmittelbare Öffnungsverhalten der Berstmembran 13 wird aufgrund des ausgebildeten Spalts 20' zwischen der Berstmembran 13 und dem Stützelement 21 nicht beeinträchtigt. Der Spalt 20` weist im dargestellten Ausführungsbeispiel eine Tiefe entsprechend einer Materialstärke des Verstärkungselements 41 auf. Der ausgebildete Spalt 20' und die innenseitige Anordnung des Verstärkungselements 41 im Aufnahmeraum A des Zellgehäuses 31 sind in Fig. 9 besonders übersichtlich illustriert.

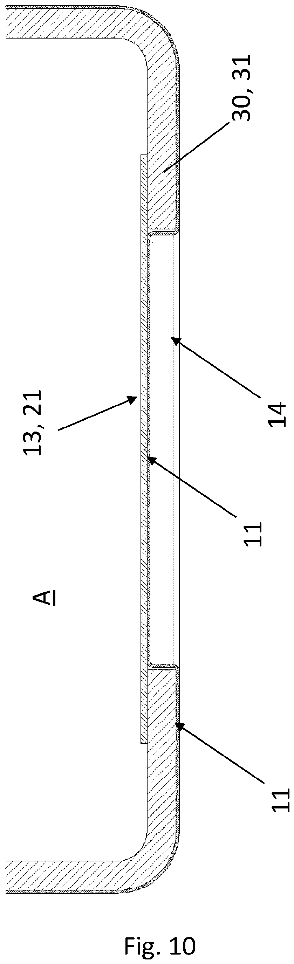

Fig. 10 zeigt eine Schnittdarstellung einer Isolierungsanordnung 10 gemäß einer erfindungsgemäßen Ausführungsform mit einer im Bereich einer Kavität 12 tiefgezogenen Außenisolierung 11.

Die als Isolationsfolie ausgebildete Außenisolierung 11 wird durch Tiefziehen bzw. Thermoforming im Bereich der Ventingöffnung 14 in Richtung des Aufnahmeraums A des Zellgehäuses 31 gezogen, wodurch keine Kavität 12 gebildet wird. Die Außenisolierung 11 liegt hierdurch unmittelbar auf der Berstmembran 13 auf und kann sich bei einem äußeren Überdruck direkt an der Berstmembran abstützen.

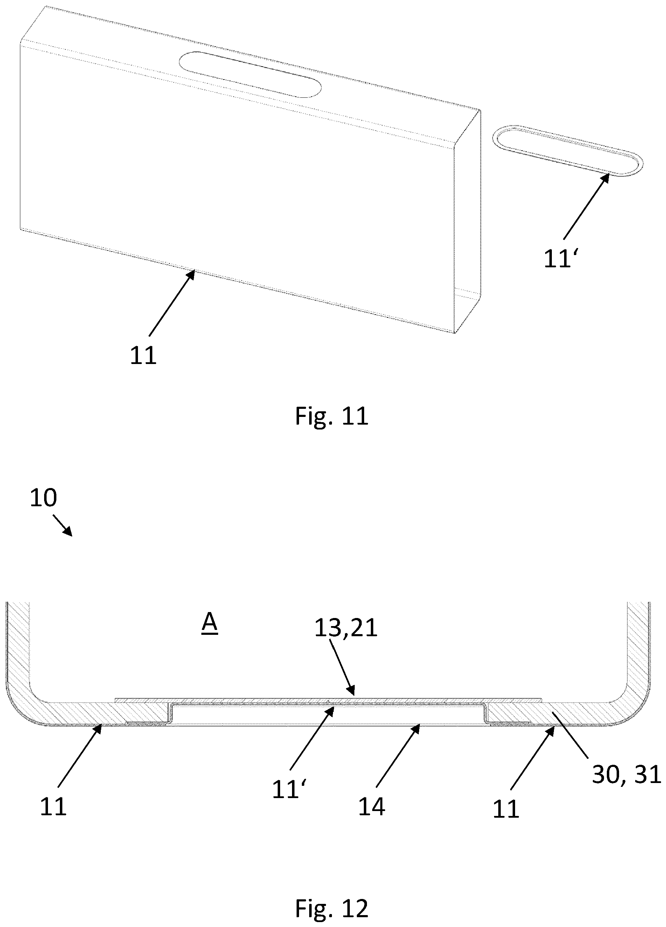

Die Fig. 11 und Fig. 12 zeigen Darstellungen einer Isolierungsanordnung 10 gemäß einer erfindungsgemäßen Ausführungsform mit einem im Bereich einer Kavität 12 verformten Isolierungsabschnitt 11'.

Die Außenisolierung 11 weist im Bereich der Kavität 12 bzw. der Berstmembran 13 eine Aussparung 11" auf. In diese Aussparung 11" wird ein im Vorfeld geformter Isolierungsabschnitt 11' hineingesetzt. Der Isolierungsabschnitt 11' ragt in die Vertiefung 14 hinein und verhindert die Ausbildung der Kavität 12. Insbesondere kann sich der Isolierungsabschnitt 11' auf der Berstmembran 13 abstützen.

Der Isolierungsabschnitt 11' kann als ein tiefgezogenes Folienstück ausgebildet und durch Heißsiegelung mit der Außenisolierung 11 verbunden sein. In Fig. 11 ist in einer dreidimensionalen Explosionsdarstellung der Isolierungsabschnitt 11` gezeigt. Die Fig. 12 veranschaulicht in einer Schnittdarstellung den mit der Außenisolierung 11 verbundenen Isolierungsabschnitt 11'.

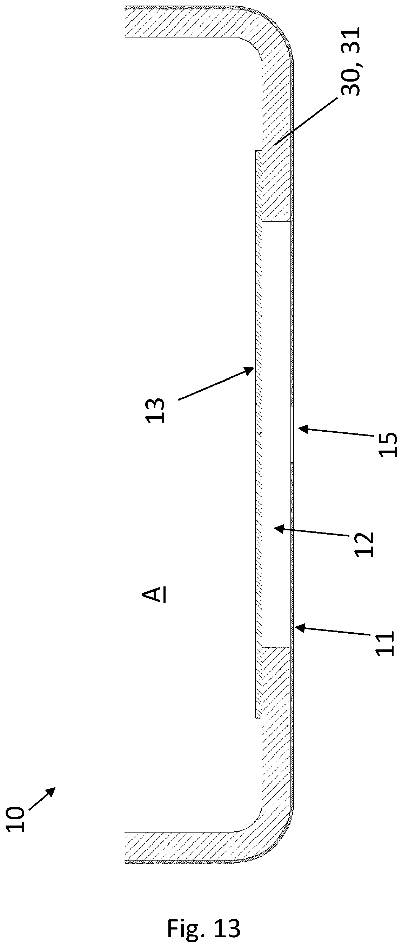

In Fig. 13 ist eine Schnittdarstellung einer Isolierungsanordnung 10 gemäß einer erfindungsgemäßen Ausführungsform mit einer Druckausgleichsöffnung 15 gezeigt. Die Außenisolierung 11 ist im Bereich der Ventingöffnung 14 mit einem Loch bzw. einer Druckausgleichsöffnung 15 versehen, durch welche Gase und Flüssigkeiten ungehindert hindurch treten können. Hierdurch kann zwischen der offenen Kavität 12 und einer äußeren Umgebung ein Druckausgleich erfolgen, sodass die Außenisolierung 11 bei externen Druckstößen nicht auf Zug belastet und zerstört wird.

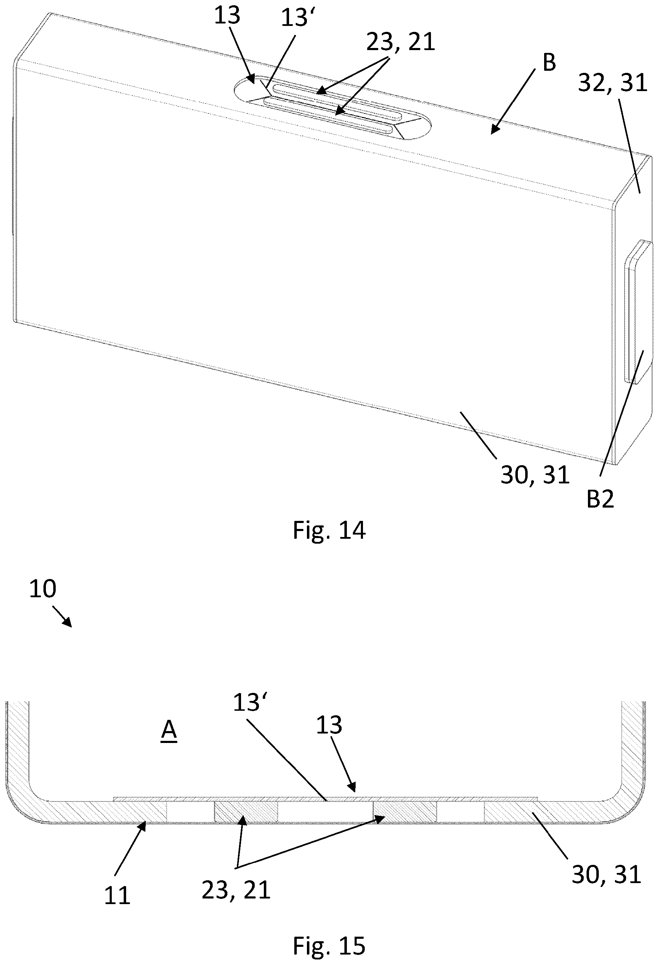

Fig. 14 und Fig. 15 zeigen Darstellungen einer Isolierungsanordnung 10 gemäß einer erfindungsgemäßen Ausführungsform mit mindestens einem als Stützsteg 23 ausgestalteten Stützelement 21, welcher auf der Berstmembran 13 aufliegt. Beispielhaft sind zwei längliche Stützstege 23 gezeigt, die auf der Berstmembran 13 orstfest fixiert sind.

Die Stützstege 23 sind beispielsweise aus einem Kunststoff hergestellt und dienen als Stütze für die Außenisolierung 11 bei einer äußeren Druckbeanspruchung. Die Stützstege 23 sind vorzugsweise nicht im Bereich der Perforierungen 13' bzw. Sollbruchstellen der Berstmembran 13 positioniert, sodass das Öffnungsverhalten der Berstmembran nicht verändert wird.

Die genaue Anordnung der Stützstege 23 auf der Berstmembran 13 ist in einer in Fig. 14 gezeigten perspektivischen Darstellung veranschaulicht. Die Fig. 15 zeigt in einer Schnittdarstellung die auf den Stützelementen 23 aufliegende Außenisolierung 11 im Bereich der Kavität 12.

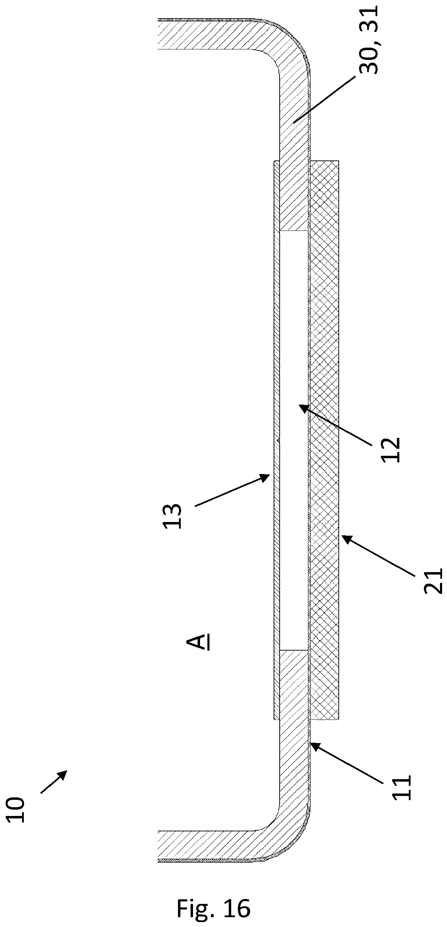

Fig. 16 zeigt eine Schnittdarstellung einer Isolierungsanordnung 10 gemäß einer erfindungsgemäßen Ausführungsform mit einem eine Kavität 12 außenseitig bedeckenden Stützelement 21. Ein derartiges Stützelement 21 kann als eine Abdeckplatte oder Druckplatte ausgebildet sein und außen auf der Außenisolierung 11 aufliegen, um eine Verformung der Außenisolierung 11 aufgrund einer Druckeinwirkung im Bereich der Kavität 12 zu verhindern. Das Stützelement 21 überdeckt vorzugsweise die Kavität 12 randseitig.

Im dargestellten Ausführungsbeispiel ist das Stützelement 21 aus einem thermoplastischen Kunststoff hergestellt und ist durch Heißsiegelung mit der Außenisolierung 11 verbunden. Somit wird die Außenisolierung 11 im Bereich der Kavität durch das Stützelement 21 strukturell gestärkt, um einer Verformung der Außenisolierung 11 entgegenzuwirken.

Das Stützelement 21 stützt sich hier an dem Zellgehäuse 31, welches die Kavität 12 umrahmt.

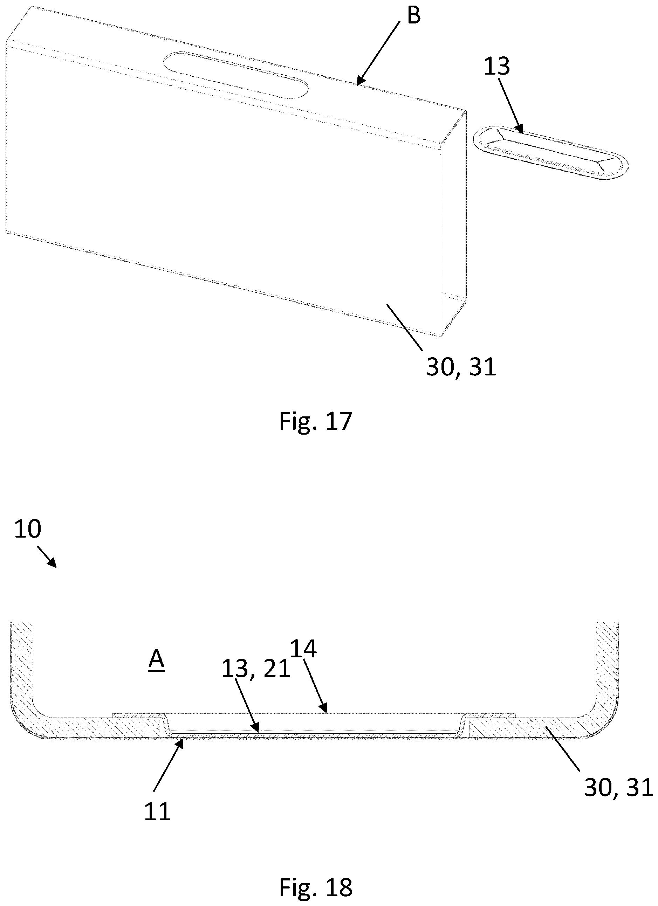

In Fig. 17 und Fig. 18 sind Darstellungen einer Isolierungsanordnung 10 gemäß einer erfindungsgemäßen Ausführungsform mit einer verformten Berstmembran 13 als Stützelement 21 gezeigt. Die Fig. 17 zeigt in einer perspektivischen Darstellung den bodenseitigen Abschnitt B des Zellgehäusemantels 30 mit der Ventingöffnung 14 und die verformte Berstmembran 13, welche in die Ventingöffnung 14 hineingesetzt wird.

Im dargestellten Ausführungsbeispiel ist die Berstmembran 13 innenseitig im Zellgehäuse 31 positioniert. Durch Tiefzug oder Prägung ist die Berstmembran 13 nach außen bzw. in Richtung der Außenisolierung 11 gewölbt. Hierdurch ragt die Berstmembran 13 bis zu einer äußeren Kontur des Zellgehäusemantels 30 durch die Ventingöffnung 14 hindurch und kann bündig mit dem Zellgehäusemantel 30 abschließen. Durch diese Maßnahme wird die Ventingöffnung 14 vollständig durch die Berstmembran 13 ausgefüllt, sodass nach einem Anbringen der Außenisolierung 11 keine Kavität 12 im Bereich der Berstmembran 13 entsteht. Ein von außen angelegter Druck auf die Außenisolierung 11 kann vorteilhafterweise durch die Berstmembran 13 abgefangen werden.

Die Fig. 18 veranschaulicht in einer Schnittdarstellung die nach außen verformte Berstmembran 13 und den bündigen Abschluss mit dem Zellgehäusemantel 30.

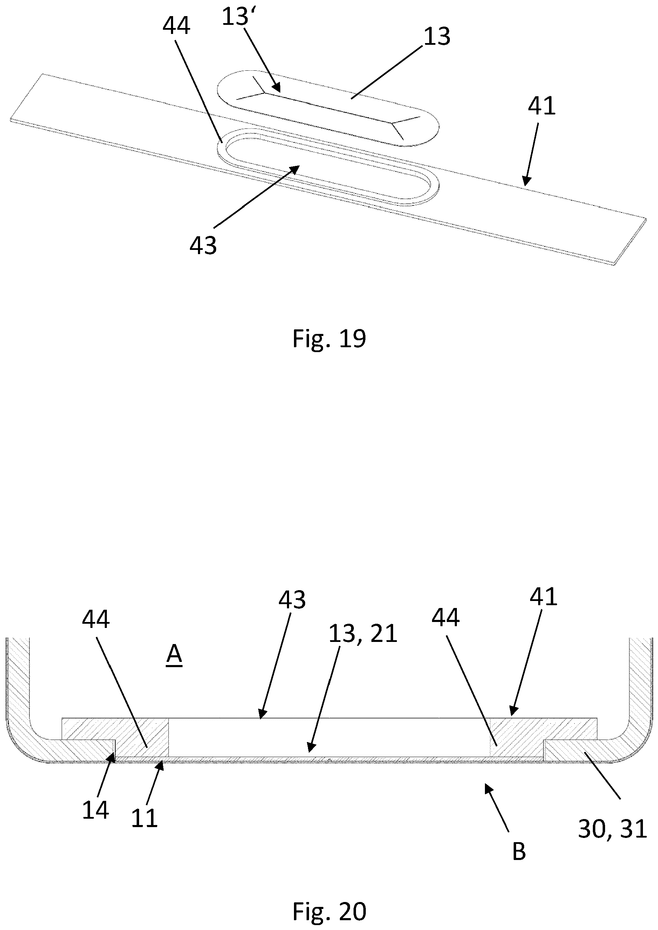

Fig. 19 und Fig. 20 zeigen Darstellungen einer Isolierungsanordnung 10 gemäß einer erfindungsgemäßen Ausführungsform mit einer auf einem Kragenabschnitt 44 angeordneten Berstmembran 13 als Stützelement 21. Analog zum in Fig. 8 gezeigten Ausführungsbeispiel wird hier ein Verstärkungselement 41 im Aufnahmeraum A des Zellgehäuses 31 eingesetzt, welches die Berstmembran 13 trägt. Beispielsweise kann die Berstmembran 13 mit dem Verstärkungselement 41 verschweißt werden. Hierfür weist das Verstärkungselement 41 einen Durchbruch 43 auf, welcher durch den Kragenabschnitt 44 begrenzt ist.

Die Berstmembran 13 ist mit dem Kragenabschnitt 44 verschweißt und verschließt den Durchbruch 43 des Verstärkungselements 41. Der Kragenabschnitt 44 ist derart dimensioniert, dass dieser mit der Berstmembran 13 durch die Ventingöffnung 14 hindurch ragt. Die Berstmembran 13 wird durch den Kragenabschnitt 44 bündig mit der äußeren Kontur des Zellgehäusemantels 30 positioniert, um die Außenisolierung 11 abzustützen.

Das Verstärkungselement 41 wird im gezeigten Ausführungsbeispiel innenseitig bzw. im Aufnahmeraum A des Zellgehäuses 31 mit dem Zellgehäusemantel 30 verbunden. Die Fig. 20 veranschaulicht in einer Schnittdarstellung das im Aufnahmeraum A angeordnete Verstärkungselement 41 und die Positionierung der Berstmembran 13 durch den Kragenabschnitt 44 relativ zu der Außenisolierung 11.

In Fig. 21 und Fig. 22 sind Darstellungen einer Batteriezelle 100 gemäß einer erfindungsgemäßen Ausführungsform mit einer Isolierungsanordnung 10 gezeigt. Im Unterschied zu den bereits gezeigten Ausführungsformen wird bei der Batteriezelle 100 eine Isolierungsanordnung 10 mit einem Zellgehäuse 31 verwendet, welches einen becherförmigen Zellgehäusemantel 30 und einen Zelldeckel 32 zum Verschließen des Zellgehäusemantels 30 aufweist. Der becherförmige Zellgehäusemantel 30 ist bodenseitig geschlossen ausgebildet und weist einen rechteckigen Querschnitt auf.

Die Batteriezelle 100 ist als eine Hardcase-Batteriezelle geformt und weist zwei im Zelldeckel 32 angeordnete Batteriepole B1, B2 auf.

Die Berstmembran 13 verschließt eine Ventingöffnung 14, die in den Zelldeckel 32 eingebracht ist. Die Berstmembran 13 ist gegenüber einer Außenkontur des Zelldeckels 32 versenkt angeordnet.

Die Außenisolierung 11 der Batteriezelle 100 ist zweiteilig ausgeführt. Der Zelldeckel 32 wird durch einen ersten Teil 16 der Außenisolierung 11 elektrisch isoliert. Der erste Teil 16 der Außenisolierung 11 ist als eine an den Zelldeckel 32 angepasste Folie ausgebildet. Die Außenisolierung 11 kann beispielsweise aus PET bestehen.

Die Isolation des als Becher ausgebildeten Zellgehäusemantels erfolgt durch einen zweiten Teil 17 der Außenisolierung 11. Der zweite Teil 17 der Außenisolierung 11 ist als eine in einer Becherform tiefgezogene PET-Folie, die nach dem Überstülpen durch Erwärmung straff auf den Zellgehäusemantel 30 aufgeschrumpft wird. Ein zunächst überstehender Randbereich des zweiten Teils 17 der Außenisolierung 11 kann sich durch die Hitzeeinwirkung um die Ecken an den Zelldeckel 32 legen und dort den ersten Teil 16 der Außenisolierung 11 überlappen.

Ein durch den ersten Teil 16 der Außenisolierung 11 ausgebildeter Hohlraum bzw. Kavität 12 zwischen der Außenisolierung 11 und der Berstmembran 13 wird durch ein als Einlegeplatte ausgebildetes Stützelement 21 ausgefüllt, um die Außenisolierung 11 bei Druck von außen abzustützen. Die jeweiligen extern sichtbaren Bestandteile der Batteriezelle 100 und der Isolierungsanordnung 10 sind in der in Fig. 21 gezeigten Explosionsdarstellung veranschaulicht.

Im Aufnahmeraum A des Zellgehäuses 31 ist ein Elektrodenstapel 110 angeordnet. Der Elektrodenstapel 110 weist nicht bezifferte Anodenschichten, Kathodenschichten und Separatorschichten auf. Die Anodenschichten und die Kathodenschichten sind elektrisch jeweils mit den Batteriepolen B1, B2 verbunden. Weiterhin ist der Aufnahmeraum A mit einem Elektrolyten befüllt. Die Fig. 22 zeigt eine Schnittdarstellung, die auch den internen Aufbau der Batteriezelle 100 veranschaulicht.

## Patentansprüche

1. Isolierungsanordnung (10) für eine Batteriezelle (100) mit einer mindestens einteilig ausgestalteten Außenisolierung (11), wobei die Außenisolierung (11) zumindest bereichsweise außenseitig auf einem Zellgehäuse (31) aufliegt und das Zellgehäuse (31) elektrisch isoliert, wobei mindestens eine Vertiefung (14) oder Kavität (12) durch die Außenisolierung (11) verdeckt ist, wobei die Außenisolierung (11) in der mindestens einen Vertiefung (14) oder an der mindestens einen Kavität (12) durch mindestens ein Stützelement (21) gestützt und/oder bedeckt und/oder mit einer Druckausgleichsöffnung (15) versehen ist.

2. Isolierungsanordnung nach Anspruch 1, wobei das mindestens eine Stützelement (21) innerhalb einer zwischen einer Berstmembran (13) und der Außenisolierung (11) ausgebildeten Kavität (12) angeordnet ist, wobei das mindestens eine Stützelement (21) zumindest bereichsweise auf der Berstmembran (13) aufliegt.

3. Isolierungsanordnung nach Anspruch 1 oder 2, wobei das mindestens eine Stützelement (21) in Form eines Stützstegs (23) ausgestaltet ist, welcher durch die Berstmembran (13) ausgebildet oder auf der Berstmembran (13) angeordnet ist.

4. Isolierungsanordnung nach einem der Ansprüche 1 bis 3, wobei die Kavität (12) vollständig oder bereichsweise durch das mindestens eine Stützelement (21) ausgefüllt ist.

5. Isolierungsanordnung nach einem der Ansprüche 1 bis 4, wobei das mindestens eine Stützelement (21) zumindest bereichsweise auf einer Abstufung (32) des Zellgehäuses (31) und/oder zumindest bereichsweise auf einer Abstufung (42) eines im Zellgehäuse (31) angeordneten Verstärkungselements (41) aufliegt.

6. Isolierungsanordnung nach einem der Ansprüche 1 bis 5, wobei das Stützelement (21) in Form einer flüssigen oder ausgehärteten Vergussmasse (22) und/oder in Form einer Einlegeplatte (20) ausgebildet ist.

7. Isolierungsanordnung nach Anspruch 6, wobei die Einlegeplatte (20) als eine hohle Einlegeplatte, als eine gelochte Einlegeplatte, als eine gitterförmige Einlegeplatte, als eine geschlitzte Einlegeplatte oder als eine massive Einlegeplatte geformt ist.

8. Isolierungsanordnung nach einem der Ansprüche 1 bis 7, wobei das mindestens eine Stützelement (21) an einer Außenfläche der Außenisolierung (11) im Bereich der Kavität (12) angeordnet ist.

9. Isolierungsanordnung nach einem der Ansprüche 1 bis 8, wobei die mindestens eine Kavität (12) zwischen einer Berstmembran (13) und der Außenisolierung (11) ausgebildet ist, wobei die Außenisolierung (11) zumindest bereichsweise durch die Berstmembran (13) gestützt ist.

10. Isolierungsanordnung nach Anspruch 9, wobei die Außenisolierung (11) im Bereich der Kavität (12) derart tiefgezogen ist, dass diese zumindest bereichsweise auf der Berstmembran (13) aufliegt.

11. Isolierungsanordnung nach Anspruch 10, wobei die Außenisolierung (11) im Bereich der Kavität (12) tiefgezogen ist, oder wobei die Außenisolierung (11) im Bereich der Kavität (12) eine Aussparung aufweist, wobei die Aussparung der Außenisolierung (11) durch einen verformten Isolierungsabschnitt (11') verschlossen ist, welcher in die Vertiefung (14) hineinragt.

12. Isolierungsanordnung nach einem der Ansprüche 9 bis 11, wobei die Berstmembran (13) im Bereich der Kavität (12) zumindest bereichsweise zu der Außenisolierung (11) hin gewölbt und/oder verformt ist, wobei die Außenisolierung (11) zumindest bereichsweise durch die Berstmembran (13) gestützt ist.

13. Isolierungsanordnung nach einem der Ansprüche 9 bis 12, wobei die Berstmembran (13) auf einem Kragenabschnitt (44) befestigt ist, welcher dazu eingerichtet ist, einen Abstand zwischen der Berstmembran (13) und der Außenisolierung (11) zu reduzieren oder zu beseitigen.

14. Batteriezelle (100), aufweisend mindestens eine Isolieranordnung (10) gemäß einem der vorhergehenden Ansprüche, und aufweisend ein aus einem Zellgehäusemantel (30) und mindestens einem Zelldeckel (32) ausgebildetes Zellgehäuse (31), wobei das Zellgehäuse (31) zumindest bereichsweise durch eine mindestens einteilig ausgeführte Außenisolierung (11) umschlossen ist, wobei das Zellgehäuse (31) einen Aufnahmeraum (A) aufweist, in welchem mindestens ein Elektrodenstapel (110) angeordnet ist, wobei das Zellgehäuse (31) mindestens eine Vertiefung (14) und/oder Kavität (12) aufweist, die durch die Außenisolierung (11) überdeckt ist.
